# EUROPÄISCHE PATENTSCHRIFT

(11) **EP 2 755 728 B1**
(45) Veröffentlichungstag und Bekanntmachung des Hinweises auf die Patenterteilung: **09.11.2016**
(21) Anmeldenummer: 12762561.4
(22) Anmeldetag: 07.09.2012
(51) Int. Cl.: B01D 3/00, B01D 3/14

(54) **ANLAGE ZUM ABTRENNEN UND KONZENTRIEREN EINER FLÜSSIGKEITSKOMPONENTE AUS EINEM FLÜSSIGEN MEHRSTOFFGEMISCH MIT EINER WAERMEPUMPE**
SYSTEM FOR SEPARATING AND CONCENTRATING A LIQUID COMPONENT FROM A LIQUID MULTICOMPONENT MIXTURE, COMPRISING A HEAT PUMP
INSTALLATION POUR SÉPARER ET CONCENTRER UN COMPOSANT LIQUIDE D'UN MÉLANGE LIQUIDE À PLUSIEURS COMPOSANTS AU MOYEN D'UNE POMPE À CHALEUR

(30) Priorität: 12.09.2011 DE 102011082513
(43) Veröffentlichungstag der Anmeldung: 23.07.2014
(73) Patentinhaber: GEA Wiegand GmbH, 76275 Ettlingen (DE)
(72) Erfinder: MAEDEBACH, Eckard, 38116 Braunschweig (DE); KINNER, Frank, 76275 Ettlingen (DE)
(74) Vertreter: Weickmann & Weickmann PartmbB
(86) Internationale Anmeldenummer: PCT/EP2012/067537
(87) Internationale Veröffentlichungsnummer: WO 2013/037712

(56) Entgegenhaltungen:
- DE-B- 1 114 168
- JP-A- 2 184 643
- US-A- 4 961 826
- US-A- 5 294 304

## Beschreibung

Die Erfindung betrifft eine Anlage zum Abtrennen und Konzentrieren einer Flüssigkeitskomponente aus einem aus mehreren Flüssigkeitskomponenten mit unterschiedlichen Siedetemperaturen gebildeten, flüssigen Mehrstoffgemisch. Insbesondere betrifft die Erfindung eine Rektifikationsanlage. Destillationsanlagen erlauben es, eine Flüssigkeitskomponente aus einem flüssigen Mehrstoffgemisch abzutrennen und zu konzentrieren, soweit das Mehrstoffgemisch aus mehreren Flüssigkeitskomponenten mit hinreichend unterschiedlichen Siedetemperaturen besteht. Beispiele hierfür sind Ethanol-Wasser-Gemische oder Isopropanol-Wasser-Gemische, aus welchen der Alkohol abgetrennt und zugleich bezogen auf die Alkoholkonzentration des Gemisches aufkonzentriert bzw. verstärkt werden kann. Die Verstärkung kann mit einer Rektifikation, d.h. einer Reinigung des verstärkten Alkohols einhergehen.

Verglichen mit dem Austreiben von Rohalkohol aus fermentierter, d.h. vergorener und damit Alkohol enthaltender Maische in einer ersten Destillationskolonne, ist das Aufkonzentrieren des Alkohols durch wiederholte Destillation merklich energieaufwändiger. Der Energiebilanz der Konzentrator- bzw. Rektifikationsapparate der Destillationsanlage muss deshalb besondere Beachtung geschenkt werden. Üblicherweise wird die Betriebsenergie dem Konzentratorapparat in Form von Frischdampf zugeführt. Es ist üblich, den Energieverbrauch der Destillationsanlage zu senken, indem die Wärmeenergie des Kopfbrüdens des Konzentratorapparats zurückgewonnen wird. So ist es bekannt, den Kopfbrüden einer Destillationskolonne mithilfe eines mechanischen Brüdenverdichters so weit zu verdichten, dass der Energieinhalt des verdichteten Brüdens ausreicht, um einen Reboiler der Destillationskolonne zu heizen. Bei der Rektifikation von Ethanol aus einem Ethanol-Wasser-Gemisch unterscheiden sich die Siedetemperaturen der Einzelkomponenten vergleichsweise stark. Während die Siedetemperatur von Ethanol bei etwa 78° C liegt, beträgt die Siedetemperatur von Wasser 100° C. Bei Wiedergewinnung und Rückführung von Betriebsenergie aus dem Kopfbrüden der Rektifikationskolonne mittels eines mechanischen Brüdenverdichters bedingt diese hohe Temperaturdifferenz ein sehr hohes Verdichtungsverhältnis des Brüdenverdichters und dementsprechend einen hohen elektrischen Energiebedarf.

Aus WO 2008/135192 A1 ist eine Alkohol-Rektifikationsanlage bekannt, bei der der aus einer ersten Destillationskolonne zugeführte Rohalkohol einer einzigen Rektifikationskolonne als Zulauf zugeführt wird. Der Kopfkondensator der Rektifikationskolonne dient zugleich der Erwärmung des Rohalkohols und erzeugt in einem ersten Entspannungsabscheider Dampf, der über einen ersten mechanischen Verdichter einem Verstärkungsteil der Rektifikationskolonne zugeführt wird. In einem zweiten Entspannungsabscheider, der den rektifizierten Alkohol liefert, wird Alkoholdampf abgetrennt, der über einen zweiten mechanischen Verdichter einen mit dem Fußbereich der Rektifikationskolonne verbundenen Reboiler heizt. Auf diese Weise gelingt es, einen größeren Anteil der zum Betrieb der Rektifikationskolonne bereitzustellenden Energie zurückzugewinnen.

Aus DE 11 14 168 B ist es bekannt, eine Flüssigkeitskomponente aus einem aus mehreren Flüssigkeitskomponenten mit unterschiedlichen Siedetemperaturen gebildeten, flüssigen Mehrstoffgemisch mittels einer Destillationsvorrichtung abzutrennen und zu konzentrieren. Die Destillationsvorrichtung umfasst eine Abtriebsteilkolonne und eine davon gesonderte Verstärkungsteilkolonne, die jeweils über gesonderte, als Reboiler dienende Sumpfverdampfer beheizt werden. Abhängig davon, ob der Anteil an leicht Siedendem in dem Mehrstoffgemisch oder der Anteil an schwer Siedendem überwiegt, ist die Verstärkungsteilkolonne oder die Abtriebsteilkolonne für den größeren Energiebedarf bemessen und an eine Wärmepumpe angeschlossen, die den Kopfbrüden dieser für den größeren Energiebedarf bemessenen Kolonne verdichtet und dem Sumpfverdampfer dieser Kolonne zu deren Beheizung zuführt. Der Sumpfverdampfer der jeweils anderen, für den geringeren Energiebedarf bemessenen Kolonne wird durch Frischdampf beheizt.

Es ist Aufgabe der Erfindung, einen Weg zu zeigen, wie der Energiehaushalt einer Anlage zum Abtrennen und Konzentrieren einer Flüssigkeitskomponente aus einem flüssigen Mehrstoffgemisch weiter verringert, insbesondere optimiert werden kann.

Diese Aufgabe wird gemäß der Erfindung durch die in Anspruch 1 angegebenen Merkmale gelöst.

Die Erfindung geht aus von einer Anlage zum Abtrennen und Konzentrieren einer Flüssigkeitskomponente aus einem aus mehreren Flüssigkeitskomponenten mit unterschiedlichen Siedetemperaturen gebildeten, flüssigen Mehrstoffgemisch, wobei die Anlage umfasst:
einen Konzentratorapparat mit einem Abtriebsteil und einem
Verstärkungsteil, einen Betriebsenergie für den Abtriebsteil liefernden, ersten mechanischen Brüdenverdichter und einen Betriebsenergie für den Verstärkungsteil liefernden, zweiten mechanischen Brüdenverdichter.

Die erfindungsgemäß Anlage ist dadurch gekennzeichnet, dass der Abtriebsteil und der Verstärkungsteil als voneinander gesonderte Kolonnen mit unterschiedlich hohem Betriebsenergiebedarf ausgebildet sind, wobei die Kolonne mit höherem Betriebsenergiebedarf für eine niedrigere Temperaturdifferenz zwischen der Siedetemperatur ihres Kolonnenkopfs und der Siedetemperatur ihres Kolonnenfußes ausgelegt ist als die Kolonne mit niedrigerem Betriebsenergiebedarf,
dass der erste mechanische Brüdenverdichter Kopfbrüden der Abtriebsteilkolonne verdichtet und die Betriebsenergie dem Fußbereich der Abtriebsteilkolonne über einen ersten, als Reboiler dienenden Sumpfverdampfer zuführt,
dass der zweite mechanische Brüdenverdichter Kopfbrüden der Verstärkungsteilkolonne verdichtet und die Betriebsenergie dem Fußbereich der Verstärkungsteilkolonne über einen zweiten, als Reboiler dienenden Sumpfverdampfer zuführt,
und dass das Mehrstoffgemisch und in dem ersten Sumpfverdampfer energetisch abgearbeitetes Brüden- und/oder Kondensatprodukt der Verstärkungsteilkolonne als Zulauf zuführbar ist.

Bei einer solchen, gegebenenfalls einen Rektifikationsapparat bildenden Konzentratorapparat können die Abtriebsteilkolonne und die Verstärkungsteilkolonne sowohl hinsichtlich der Temperaturdifferenz zwischen Kopfsiedetemperatur und Fußsiedetemperatur wie auch hinsichtlich des Energiebedarfs gesondert voneinander dimensioniert werden. Der Kolonne mit dem höheren thermodynamischen Energiebedarf kann eine niedrige Temperaturdifferenz zugeordnet werden, während die Kolonne mit dem niedrigeren Energiebedarf für eine größere Temperaturdifferenz bemessen wird. Beide Kolonnen werden hierzu über gesonderte mechanische Brüdenverdichter und Sumpfverdampfer beheizt. Der für die kleinere Temperaturdifferenz bemessene mechanische Brüdenverdichter kann für einen kleineren Verdichtungsgrad ausgelegt sein als der die Kolonne mit der größeren Temperaturdifferenz beheizende Verdichter. Der niedrigere Verdichtungsgrad erlaubt es selbst bei höherem thermodynamischen Energiebedarf den mechanischen Brüdenverdichter kostenoptimiert zu betreiben. Entsprechendes gilt für den mechanischen Brüdenverdichter der für die höhere Temperaturdifferenz bemessenen Kolonne, da hier der Brüdenverdichter den höheren Verdichtungsgrad bei niedrigerem thermodynamischen Energiebedarf leisten kann. Vorzugsweise ist die Verstärkungsteilkolonne für den größeren Energiebedarf bemessen.

Verglichen mit herkömmlichen Konzentratorapparaten mit nur einer einzigen Kolonne und einem mechanischen Brüdenverdichter lassen sich mit einer erfindungsgemäßen Anlage bei der Rektifikation eines Isopropanol-Wasser-Gemisches bis zu 50% des elektrischen Energiebedarfs für die Brüdenverdichtung einsparen. Bei einem Ethanol-Wasser-Gemisch beträgt die Einsparung an elektrischer Energie bis zu 40%.

Die erfindungsgemäße Anlage eignet sich nicht nur zum Aufkonzentrieren von Ethanol eines Ethanol-Wasser-Gemisches oder von Isopropanol eines Isopropanol-Wasser-Gemisches, sondern eignet sich für alle Lösemittelgemische, bei welchen konzentrationsbedingt ein großer Unterschied zwischen der Siedetemperatur im Kolonnensumpf bzw. -fuß und der Kondensationstemperatur des Produkts am Kopf der Konzentratorkolonne vorliegt. Allgemein kann die Anlage zur destillativen Trennung von flüssigen Vielstoffgemischen eingesetzt werden. Die erzielbaren Einsparungen an elektrischer Energie hängen auch hier von den konzentrationsbedingten Temperaturdifferenzen und den thermischen Energiebedarfsanforderungen in der Abtriebsteilkolonne bzw. der Verstärkungsteilkolonne ab.

Es versteht sich, dass bei mehrstufigen Konzentratorapparaten jede einzelne der Stufen durch gesonderte Kolonnen für den Abtriebsteil und den Verstärkungsteil bei gesonderter Energiebereitstellung über mechanische Brüdenverdichter gebildet sein kann. Der Konzentrationsschnitt zwischen der Abtriebsteilkolonne und der jeweils zugeordneten Verstärkungsteilkolonne kann unterschiedlich gewählt sein, ebenso wie auch unterschiedliche Rücklaufverhältnisse zwischen der Verstärkungsteilkolonne und der Abtriebsteilkolonne gewählt werden können.

Die erfindungsgemäße Anlage erlaubt nicht nur das Trennen flüssiger Mehrstoffgemische, bei welcher die leicht siedende Komponente in niedriger Verdünnung im Gemische vorliegt, sondern erlaubt auch das Abtrennen einer in niedriger Verdünnung in dem Gemisch vorliegenden, schwer siedenden Komponente bei gleichzeitig vorliegendem, großen, konzentrationsbedingten Temperaturunterschied zwischen dem Kolonnenkopf und dem Kolonnensumpf. Derartige Gemische können herkömmlich nur mit relativ hohem thermischen Energieaufwand getrennt werden, da ein Großteil des Gemisches über den Kolonnenkopf getrieben werden muss. In diesem Fall ist der Einsatz eines mechanischen Brüdenverdichters wegen des dann großen Verdichtungsverhältnisses bei herkömmlichen Anlagen unattraktiv. Im Rahmen der Erfindung kann der thermische Energiebedarf auch hier beträchtlich verringert werden.

Um die Abtriebsteilkolonne und die Verstärkungsteilkolonne besser aneinander anpassen zu können, wird das Mehrstoffgemisch und/oder das in dem ersten Sumpfverdampfer energetisch abgearbeitete Brüden- und/oder Kondensatprodukt bevorzugt dem Fußbereich der Verstärkerteilkolonne zugeführt.

Der Gesamtenergiehaushalt der Anlage lässt sich verringern, wenn das in dem zweiten Sumpfverdampfer energetisch abgearbeitete Brüden- und/oder Kondensatprodukt einen das zulaufende Mehrstoffgemisch erwärmenden, die konzentrierte Flüssigkeitskomponente kondensierenden Wärmetauscher heizt. Ein entsprechender Vorteil kann erreicht werden, wenn eine nach dem Abtrennen der zu konzentrierenden Flüssigkeitskomponente verbleibende Rest-Flüssigkeitskomponente des Mehrstoffgemisches, die im Fußbereich der Abtriebsteilkolonne anfällt über einen Wärmetauscher das zulaufende Mehrstoffgemisch heizt.

Zweckmäßigerweise sind der erste Sumpfverdampfer und der zweite Sumpfverdampfer über gesonderte Zwangsumlaufkreise mit dem Fußbereich der Abtriebsteilkolonne bzw. dem Fußbereich der Verstärkungsteilkolonne verbunden. Dies erleichtert die Steuerung der beiden Kolonnen.

Die Abtriebsteilkolonne erhält ihren Zulauf über eine Zulaufleitung aus dem Fußbereich der Verstärkungsteilkolonne, insbesondere über einen Zwangsumlaufkreis des Sumpfverdampfers der Verstärkungsteilkolonne.

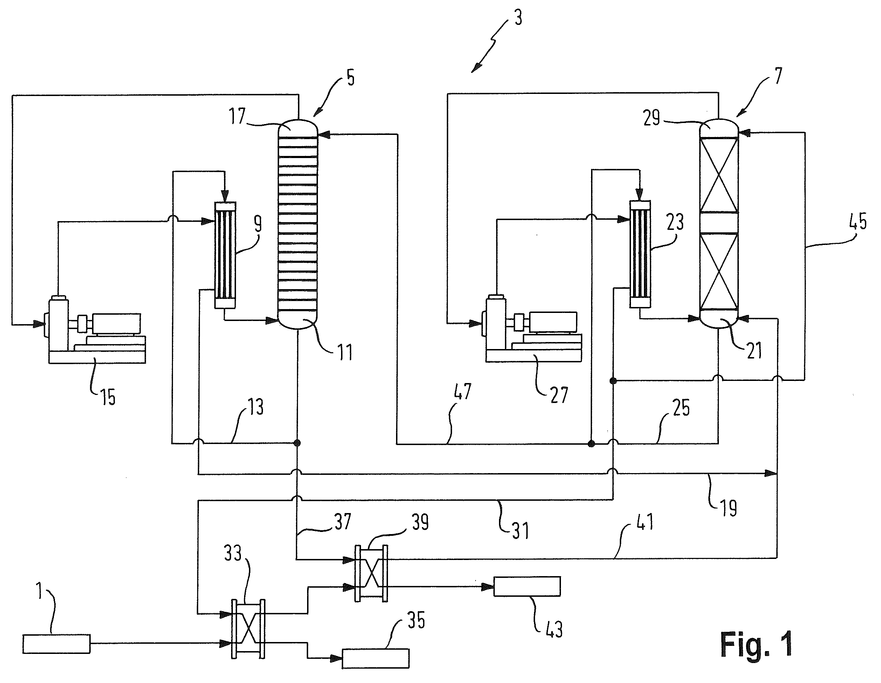

Im Folgenden soll die Erfindung anhand einer Zeichnung näher erläutert werden. Die Zeichnung zeigt ein schematisches Blockschaltbild einer Rektifikationsanlage zum Abtrennen und Konzentrieren einer Alkoholkomponente, insbesondere Ethanol oder Isopropanol aus einem flüssigen Alkohol-Wasser-Gemisch.

Aus einer nicht näher dargestellten Destillationsanlage wird bei 1 ein Ethanol-Wasser-Gemisch mit einer Konzentration von etwa 40 bis 60 Vol.-% einem Konzentrator- bzw. Rektifikationsapparat 3 zugeführt, der die Alkoholkomponente aus dem Gemisch abtrennt und aufkonzentriert bzw. verstärkt. Der Konzentratorapparat 3 umfasst eine Abtriebsteilkolonne 5 sowie eine davon gesonderte Verstärkungsteilkolonne 7. Der Abtriebsteilkolonne 5 ist ein Sumpfverdampfer 9 zugeordnet, der zusammen mit einem Fußbereich 11 der Abtriebsteilkolonne 5 in einem Zwangsumlaufkreis 13 angeordnet ist und einen Betriebsenergie liefernden Reboiler der Abtriebsteilkolonne 5 bildet. Der Sumpfverdampfer 9 wird über einen elektromotorisch angetriebenen, mechanischen Brüdenverdichter 15 beheizt, der aus einem Kopfbereich 17 der Abtriebsteilkolonne 5 zugeführten Kopfbrüden verdichtet. Der in dem Sumpfverdampfer 9 energetisch abgearbeitete und gegebenenfalls zumindest teilweise kondensierte Alkohol-Kopfbrüden wird über eine Verbindungsleitung 19 als Zulauf einem Fußbereich 21 der Verstärkungsteilkolonne 7 zugeführt.

Der Verstärkungsteilkolonne 7 ist ein weiterer Sumpfverdampfer 23 zugeordnet, der zusammen mit dem Fußbereich 21 in einem Zwangsumlaufkreis 25 angeordnet ist und einen Reboiler für die Verstärkungsteilkolonne 7 bildet. Der Sumpfverdampfer 23 wird von einem weiteren elektromotorisch angetriebenen, mechanischen Brüdenverdichter 27 beheizt, der aus einem Kopfbereich 29 der Verstärkungsteilkolonne 7 abgezogenen Alkohol-Kopfbrüden verdichtet und dem Sumpfverdampfer 23 zu dessen Beheizung zuführt.

Der in dem Sumpfverdampfer 23 energetisch abgearbeitete und gegebenenfalls zumindest teilweise kondensierte Brüden wird über eine Leitung 31 einem Wärmetauscher 33 zugeführte, der den bei 1 zugeführten Rohalkohol erwärmt, wobei zugleich das über die Leitung 31 zugeführte Alkoholprodukt kondensiert wird und bei 35 als rektifizierter Alkohol abgeführt werden kann.

Das im Fußbereich 11 der Abtriebsteilkolonne 5 anfallende Lutterwasser wird über eine Leitung 37 einem weiteren Wärmetauscher 39 zugeführt, der den im Wärmetauscher 33 vorgewärmten Rohalkohol weiter erwärmt und über eine Leitung 41 an den Fußbereich 21 der Verstärkungsteilkolonne 7 als Zulauf abgibt. Das bei der Rektifikation anfallende Lutterwasser kann bei 43 abgezogen werden.

Ein Teil des in dem Sumpfverdampfer 23 energetisch abgearbeiteten Produkts wird über eine Leitung 45 dem Kopfbereich 29 der Verstärkungsteilkolonne 7 als Rückfluss zugeführt. Der Zulauf zur Abtriebsteilkolonne 5 erfolgt über eine Leitung 47 aus dem Fußbereich 21 der Verstärkungsteilkolonne 7 bzw. dem Zwangsumlaufkreis 25.

Die Verstärkungsteilkolonne 7 hat einen höheren thermodynamischen Energiebedarf als die Abtriebsteilkolonne 5. Sie ist so bemessen, dass die Temperaturdifferenz zwischen der Siedetemperatur in ihrem Fußbereich 21 und der Siedetemperatur in ihrem Kopfbereich 29 kleiner ist als die Temperaturdifferenz zwischen der Siedetemperatur im Fußbereich 11 der Abtriebsteilkolonne 5 und der Siedetemperatur in deren Kopfbereich 17. Auf diese Weise kann der Verdichtungsgrad des mechanischen Brüdenverdichters 27 geringer ausgelegt werden, als der Verdichtungsgrad des mechanischen Brüdenverdichters 15, obwohl die Verstärkungsteilkolonne 7 einen höheren Energiebedarf hat als die Abtriebsteilkolonne 5. Insgesamt kann auf diese Weise der elektrische Energiebedarf des Konzentratorapparats 3 beträchtlich gesenkt werden.

Der Konzentratorapparat 3 wurde vorangegangen für die Rektifikation von Ethanol in einem Ethanol-Wasser-Gemisch beschrieben. In entsprechender Weise kann auch Isopropanol in einem Isopropanol-Wasser-Gemisch rektifiziert werden. Die Anlage lässt sich auch zum Abtrennen und Konzentrieren von Flüssigkeitskomponenten aus anderen flüssigen Mehrstoffgemischen einsetzen, soweit deren Flüssigkeitskomponenten hinreichend unterschiedliche Siedetemperaturen haben. Das Flüssigkeitsgemisch wird jeweils bei 1 zugeführt, während das Destillat bei 35 abgeführt werden kann und die restlichen Gemischkomponenten bei 43 anfallen.

## Patentansprüche

1. Anlage zum Abtrennen und Konzentrieren einer Flüssigkeitskomponente aus einem aus mehreren Flüssigkeitskomponenten mit unterschiedlichen Siedetemperaturen gebildeten, flüssigen Mehrstoffgemisch, insbesondere eines Ethanol-Wasser-Gemisches oder eines Isopropanol-Wasser-Gemisches, umfassend:
- einen Konzentratorapparat (3) mit zwei voneinander gesonderten Kolonnen (5, 7), von denen eine erste Kolonne eine Abtriebsteilkolonne (5) und eine zweite Kolonne eine Verstärkungsteilkolonne (7) bildet und die zwei Kolonnen (5, 7) für unterschiedlich hohen Betriebsenergiebedarf ausgebildet sind, und
- einen Betriebsenergie für die Abtriebsteilkolonne (5) liefernden, ersten mechanischen Brüdenverdichter (15), der Kopfbrüden der Abtriebsteilkolonne (5) verdichtet und die Betriebsenergie dem Fußbereich (11) der Abtriebsteilkolonne (5) über einen ersten, als Reboiler dienenden Sumpfverdampfer (9) zuführt,
**dadurch gekennzeichnet, dass** ein Betriebsenergie für die Verstärkungsteilkolonne (7) liefernder, zweiter mechanischer Brüdenverdichter (27) Kopfbrüden der Verstärkungsteilkolonne (7) verdichtet und die Betriebsenergie dem Fußbereich (21) der Verstärkungsteilkolonne (7) über einen zweiten, als Reboiler dienenden Sumpfverdampfer (23) zuführt,
dass die Kolonne (7) mit höherem Betriebsenergiebedarf für eine niedrigere Temperaturdifferenz zwischen der Siedetemperatur ihres Kolonnenkopfs (29) und der Siedetemperatur ihres Kolonnenfußes (21) ausgelegt ist als die Kolonne (5) mit niedrigerem Betriebsenergiebedarf,
dass der Betriebsenergie für die für den höheren Betriebsenergiebedarf ausgebildete Kolonne (7) liefernde mechanische Brüdenverdichter (27) für einen kleineren Verdichtungsgrad bemessen ist als der die Betriebsenergie für die für den niedrigeren Betriebsenergiebedarf ausgebildete Kolonne (5) liefernde mechanische Brüdenverdichter (15),
und dass das Mehrstoffgemisch und in dem ersten Sumpfverdampfer (9) energetisch abgearbeitetes Brüden- und/oder Kondensatprodukt der Verstärkungsteilkolonne (7) als Zulauf zuführbar sind.

2. Anlage nach Anspruch 1, **dadurch gekennzeichnet, dass** das Mehrstoffgemisch und/oder das in dem ersten Sumpfverdampfer (9) energetisch abgearbeitete Brüden- und/oder Kondensatprodukt dem Fußbereich (21) der Verstärkungsteilkolonne (7) zuführbar sind.

3. Anlage nach Anspruch 1 oder 2, **dadurch gekennzeichnet, dass** das in dem zweiten Sumpfverdampfer (23) energetisch abgearbeitete Brüden- und/oder Kondensatprodukt einen das zulaufende Mehrstoffgemisch erwärmenden, die konzentrierte Flüssigkeitskomponente kondensierenden Wärmetauscher (33) heizt.

4. Anlage nach einem der Ansprüche 1 bis 3, **dadurch gekennzeichnet, dass**
im Zulaufweg (41) des Mehrstoffgemisches zur Verstärkungsteilkolonne (7) ein vom Fußbereich (11) der Abtriebsteilkolonne (5) aus beheizter Wärmetauscher (39) angeordnet ist.

5. Anlage nach einem der Ansprüche 1 bis 4, **dadurch gekennzeichnet, dass**
der erste Sumpfverdampfer (9) und der zweite Sumpfverdampfer (23) über gesonderte Zwangsumlaufkreise (13, 25) mit dem Fußbereich (11) der Abtriebsteilkolonne (5) bzw. dem Fußbereich (21) der Verstärkungsteilkolonne (7) verbunden sind.

6. Anlage nach einem der Ansprüche 1 bis 5, **dadurch gekennzeichnet, dass** der Fußbereich (21) der Verstärkungsteilkolonne (7) über eine Zulaufleitung (47) mit der Abtriebsteilkolonne (5) verbunden ist.

7. Anlage nach einem der Ansprüche 1 bis 6, **dadurch gekennzeichnet, dass**
die Verstärkungsteilkolonne (7) für den höheren Energiebedarf und die niedrigere Temperaturdifferenz bemessen ist.

## Claims

1. A plant for separating and concentrating a liquid component from a liquid multicomponent mixture comprising several liquid components with different boiling temperatures, in particular an ethanol-water mixture or an isopropanol-water mixture, comprising:
- a concentrator apparatus (3) with two separated columns (5, 7), in which a first column forms an output portion column (5) and a second column forms an intensification portion column (7) and the two columns (5, 7) are adapted for different levels of operating energy consumption, and
- a first mechanical vapour compressor (15) delivering operating energy for the output portion column (5) which compresses top alcohol vapours of the output portion column (5) and delivers the operating energy to the bottom part (11) of said output portion column (5) via a first sump evaporator (9) serving as a reboiler,
**characterized in that** a second mechanical vapour compressor (27) delivering operating energy for the intensification portion column (7) compresses top alcohol vapours of the intensification portion column (7) and delivers the operating energy to the bottom part (21) of said intensification portion column (7) via a second sump evaporator (23) serving as a reboiler, that the column (7) with a higher level of operating energy consumption is adapted for a lower temperature difference between the boiling temperature of its column head (29) and the boiling temperature of its column base (21) than the column (5) with the lower level of operating energy consumption, that the mechanical vapour compressor (27) delivering the operating energy for the column (7) designed for the higher level of operating energy consumption is adapted for a lower degree of compression than the mechanical vapour compressor (15) delivering the operating energy for the column (5) adapted for the lower level of operating energy consumption, and that the multicomponent mixture and the vapour and/or condensation product energetically processed in the first sump evaporator (9) can be delivered to the intensification portion column (7) as a feed stream.

2. Plant according to claim 1, **characterized in that**
the multicomponent mixture and/or the vapour and/or condensation product energetically processed in the first sump evaporator (9) can be delivered to the bottom part (21) of said intensification portion column (7).

3. Plant according to claim 1 or 2, **characterized in that**
the vapour and/or condensation product energetically processed in the second sump evaporator (23) heats a heat exchanger (33) heating the delivered multicomponent mixture and condensing the concentrated liquid component.

4. Plant according to one of claims 1 to 3, **characterized in that**
a heat exchanger (39) heated by the bottom part (11) of said output portion column (5) is arranged in the feed line (41) from the multicomponent mixture to the intensification portion column (7).

5. Plant according to one of claims 1 to 4, **characterized in that**
the first sump evaporator (9) and the second sump evaporator (23) are connected to the bottom part (11) of the output portion column (5) or the bottom part (21) of the intensification portion column (7) by separated forced circuits (13, 25).

6. Plant according to one of claims 1 to 5, **characterized in that**
the bottom part (21) of the intensification portion column (7) is connected to the output portion column (5) via a feed line (47).

7. Plant according to one of claims 1 to 6, **characterized in that**
the intensification portion column (7) is adapted for the higher energy consumption and the lower temperature difference.

## Revendications

1. Une installation pour séparer et concentrer un composant liquide d'un mélange à plusieurs composants liquide comprenant plusieurs composants liquides avec des températures d'ébullition différentes, en particulier d'un mélange éthanol-eau ou d'un mélange isopropanol-eau, comprenant:
- un appareil concentrateur (3) avec deux colonnes séparées (5, 7), dans lequel une première colonne forme une colonne de portion de sortie (5) et une deuxième colonne forme une colonne de portion d'intensification (7) et les deux colonnes (5, 7) sont adaptées pour des niveaux différents de consommation d'énergie de fonctionnement, et
- un premier compresseur de vapeur mécanique (15) délivrant de l'énergie pour la colonne de portion de sortie (5) qui comprime des vapeurs d'alcool supérieures de la colonne de portion de sortie (5) et délivre de l'énergie de fonctionnement à la partie inférieure (11) de la colonne de portion de sortie (5) via un premier évaporateur à puits (9) servant de rebouilleur,
**caractérisé en ce qu'**un deuxième compresseur de vapeur mécanique (27) délivrant de l'énergie de fonctionnement à la colonne de portion d'intensification (7) comprime les vapeurs d'alcool supérieures de la colonne de portion d'intensification (7) et délivre l'énergie de fonctionnement à la partie inférieure (21) de la colonne de portion d'intensification (7) via un deuxième évaporateur à puits (23) servant de rebouilleur,
que la colonne (7) avec un niveau plus haut de consommation d'énergie de fonctionnement est adaptée pour une différence de température plus petite entre la température d'ébullition à la tête de la colonne (29) et la température d'ébullition à la base de la colonne (21) comparé à la colonne (5) avec un niveau plus bas de consommation d'énergie de fonctionnement,
que le compresseur de vapeur mécanique (27) délivrant de l'énergie de fonctionnement pour la colonne (7) adaptée pour le niveau plus haut de consommation d'énergie de fonctionnement est adapté pour un degré plus bas de compression que le compresseur de vapeur mécanique (15) délivrant de l'énergie pour la colonne de portion de sortie (5) adapté pour le niveau plus bas de consommation d'énergie de fonctionnement,
et que le mélange à plusieurs composants et le produit de vapeur et/ou de condensation procédé énergétiquement dans le premier évaporateur à puits (9) peut être délivré à la colonne de portion d'intensification (7) comme jet d'amenée.

2. L'installation selon la revendication 1, **caractérisée en ce que**
le mélange à plusieurs composants et/ou le produit de vapeur et/ou de condensation procédé énergétiquement dans le premier évaporateur à puits (9) peut être délivré à la partie inférieure (21) de la colonne de portion d'intensification (7).

3. L'installation selon la revendication 1 ou 2, **caractérisée en ce que**
le produit de vapeur et/ou de condensation procédé énergétiquement dans le deuxième évaporateur à puits (23) chauffe un échangeur de chaleur (33) chauffant le mélange à plusieurs composants délivré et condensant le composant liquide concentré.

4. L'installation selon une des revendications 1 à 3, **caractérisée en ce que** l'échangeur de chaleur (39) chauffé par la partie inférieure (11) de la colonne de portion de sortie (5) est arrangé dans la conduite d'amenée (41) du mélange à plusieurs composants vers la colonne de portion d'intensification (7).

5. L'installation selon une des revendications 1 à 4, **caractérisée en ce que**
le premier évaporateur à puits (9) et le deuxième évaporateur à puits (23) sont connectés à la partie inférieure (11) de la colonne de portion de sortie (5) ou la partie inférieure (21) de la colonne de portion d'intensification (7) par des circuits forcés (13, 25) séparés.

6. L'installation selon une des revendications 1 à 5, **caractérisée en ce que**
la partie inférieure (21) de la colonne de portion d'intensification (7) est connectée à la colonne de portion de sortie (5) via une conduite d'amenée (47).

7. L'installation selon une des revendications 1 à 6, **caractérisée en ce que**
la colonne de portion d'intensification (7) est adaptée pour une consommation d'énergie plus grande et une différence de température plus petite.
